# EUROPÄISCHE PATENTSCHRIFT

(11) **EP 0 823 454 B1**
(45) Veröffentlichungstag und Bekanntmachung des Hinweises auf die Patenterteilung: **10.01.2001**
(21) Anmeldenummer: 97112657.8
(22) Anmeldetag: 24.07.1997
(51) Int. Cl.: C08L 23/28, C08F 8/20, C08K 5/098

(54) **Halogenierte Butylkautschuke mit einem geringen Halogengehalt**
Low halogen halobutyl rubbers
Caoutchoucs butyl halogénés à faible teneur en halogène

(30) Priorität: 06.08.1996 DE 19631731
(43) Veröffentlichungstag der Anmeldung: 11.02.1998
(73) Patentinhaber: BAYER AG, 51368 Leverkusen (DE)
(72) Erfinder: Sumner, Anthony, 51061 Köln (DE); Kelbch, Stefan, Dr., 53804 Much (DE); Verbiest, Albert, 2170 Antwerpen (BE)

(56) Entgegenhaltungen:
- EP-A- 0 385 760
- DE-B- 1 291 237
- US-A- 4 104 218
- US-A- 4 254 240

## Beschreibung

Die vorliegende Erfindung betrifft halogenierte Butylkautschuke mit einem geringen Halogengehalt, ein Verfahren zu deren Herstellung sowie deren Verwendung zur Herstellung von Kautschukvulkanisaten.

Die Verwendung von halogenierten Butylkautschuken insbesondere im Reifenbau ist bekannt, da halogenierte Butylkautschuke sich besonders vorteilhaft erweisen im Hinblick auf das Adhäsionsverhalten, auf die Biegebeständigkeit, auf die Lebensdauer und im Hinblick auf die Luft- und Wasserundurchlässigkeit. Bedingt durch die Ausgewogenheit der erwähnten physikalischen Eigenschaften werden halogenierte Butylkautschuke bevorzugt im Reifenbau eingesetzt und dort insbesondere bei der Herstellung von Reifen-Innenlinern. Durch die Verwendung von Reifen-Innenlinern, die auf halogenierten Butylkautschuken basieren, werden die Reifen-Karkasse und die darin verwendeten Stahl- oder Textilcorde vor dem Angriff von Feuchtigkeit und Luftsauerstoff geschützt. Dies wirkt sich positiv auf die Lebensdauer von Luftreifen, insbesondere von stark beanspruchten LKW-Reifen aus.

Es hat nicht an Versuchen gefehlt, die physikalischen Eigenschaften der halogenierten Butylkautschuke zu verbessern, durch z.B. Erhöhung des Halogengehalts im Butylkautschuk (Verbesserung der Adhäsionseigenschaft). Wir verweisen in diesem Zusammenhang auf die US-Patentschrift 2,698,041, auf die britische Patentanmeldung GB 2 072 576 und auf die europäische Patentanmeldung EP 0 385 760, wo halogenierte Butylkautschuke sowie deren Einsatz und Verwendung im Reifenbau beschrieben werden.

Aufgrund der Nachteile bei Verwendung von reinen halogenierten Butylkautschuken als Kautschukmaterial für Innenliner (siehe EP 0 385 760) wurde in jüngster Zeit vorgeschlagen, Mischungen aus halogenierten Butylkautschuken und reinem Butylkautschuk zu verwenden. Dadurch soll die Rißbildung bei den Innenlinern aufgrund thermischer Härtungsprozesse vermieden werden, was sich letztendlich für die Lebensdauer des Luftreifens positiv auswirkt.

Nachteilig bei den in dem vorliegenden Stand der Technik beschriebenen halogenierten Butylkautschuken bzw. Mischungen von halogenierten Butylkautschuken mit reinem Butylkautschuk ist z.B. das nicht befriedigende Alterungsverhalten, die Bildung von korrosiv wirkendem Halogenwasserstoff während des Vernetzungsprozesses und die geringe Vernetzungsgeschwindigkeiten bei den beschriebenden Blends, was zu Lasten der Produktivität bei der Reifenherstellung geht.

Halogenierte Butylkautschuke sind beispielsweise auch bekannt aus DE 1291237, US 4,104,218 sowie US 4,254,240. So werden in DE 1291237 Luftreifen für Fahrzeuge beschrieben, die insgesamt oder teilweise aus vulkanisiertem halogeniertem Butylkautschuk allein oder in Mischung mit anderen kautschukartigen Polymerisaten bestehen, wobei der halogenierte Butylkautschuk einen Chlorgehalt von mindestens 0,5 Gew.-%, bezogen auf das Gesamtgewicht des halogenierten Butylkautschukes, besitzt, jedoch nicht mehr als ungefähr ein gebundenes Chloratom je Doppelbindung des halogenierten Butylkautschuks enthält. In US 4,104,216 werden durch Alkalimetallcarboxylate oder Erdalkalimetallcarboxylate und durch Polyether stabilisierte halogenierte Butylkautschuke beschrieben, wobei die Stabilisatoren den halogenierten Butylkautschuken separat zugemischt werden. In US 4,253,240 wird ein spezielles, kontinuierliches Verfahren zur Halogenierung von Butylkautschuken mittels Bromchlorid beschrieben, wobei die durch Brom und Chlor substituierten Butylkautschuke ein verbessertes Eigenschaftsprofil gegenüber den Chlor- oder Brom-Butylkautschuken besitzen sollen.

Die physikalischen Eigenschaften der in den genannten Dokumenten beschriebenen Butylkautschuken sind jedoch ebenfalls noch verbesserungswürdig.

Aufgabe der vorliegenden Erfindung ist es daher, halogenierte Butylkautschuke zur Verfügung zu stellen, die insgesamt eine Verbesserung der zuvor erwähnten Eigenschaften gewährleisten, ohne daß der Einsatz von Blends aus halogenierten Butylkautschuken und nicht halogenierten Butylkautschuken erforderlich ist.

Die Aufgabe wurde durch die zur Verfügungstellung von halogenierten Butylkautschuken mit einem definierten, geringen Gehalt an Halogen, einem definierten Gehalt an nicht halogenierten Doppelbindungen und einem definierten Gehalt an Antiagglomerat-/Vulkanisationskontrollmitteln gelöst.

Gegenstand der Erfindung sind demnach halogenierte Butylkautschuke, die dadurch gekennzeichnet sind, daß sie einen Halogengehalt von 0,5 bis 2,5 % Gew.-% sowie einen Gehalt an nicht halogenierten Doppelbindungen von mehr als 0,7 Mol-% besitzen und der Gehalt an Antiagglomerat-/Vulkanisationskontrollmitteln 1,0 bis 2,2 Gew.-%, bezogen auf die Gesamtmenge an halogeniertem Butylkautschuk, beträgt.

Als halogenierte Butylkautschuke werden erfindungsgemäß solche Butylkautschuke verstanden, die durch Chlor und/oder Brom, bevorzugt durch Brom halogeniert sind.

Bevorzugt sind erfindungsgemäß die Brombutylkautschuke mit einem Gehalt an nicht bromierten Doppelbindungen von 0,7 bis 1,0 Mol-%, insbesondere 0,75 bis 0,95 Mol-%, und einem Gehalt an Antiagglomerat-/Vulkanisationskontrollmitteln von 1,25 bis 2,0 Gew.-%, insbesondere 1,45 bis 2,0 Gew-%.

Der Halogengehalt der erfindungsgemäßen Butylkautschuke beträgt bevorzugt 0,8 bis 1,9 Gew.-%. Im Falle von Brombutylkautschuk beträgt der Bromgehalt bevorzugt 1,4 bis 1,8 Gew.-%.

Erfindungsgemäß werden unter "Butylkautschuke" Copolymerisate auf Basis von Isoolefinen und Olefinen verstanden, wie sie beispielsweise im vorstehend genannten US-Patent 2,698,041 und in den anderen erwähnten Patentveröffentlichungen beschrieben sind. Die erwähnten Butylkautschuke sind insbesondere gekennzeichnet, durch einen Gehalt von 70 bis 99,5 Gew.-% an Isoolefinen mit 4 bis 8 Kohlenstoffatomen, wie Isobutylen, 3-Methylbuten-1,4, Methylpenten-1,2, Ethylbuten-1 und/oder 4-Ethylpenten-1, insbesondere Isobuten, und einen Gehalt von. 0,5 bis 30 Gew.-% an Dienen mit 4 bis 18 Kohlenstoffatomen, wie Isopren, Butadien-1,3, 2,4-Dimethylbutadien-1,3, Piperilin, 3-Methylpentadien-1,3, Hexadien-2,4, 2-Neopentyl-butadien-1-3, 2-Methylhexadien-1,5, 2-Methylpentadien-1,4, 2-Methylheptadien-1,6, Cyclopentadien, Cyclohexadien, 1-Vinylcyclohexadien und Mischungen davon. Bevorzugt ist die Verwendung von Isopren. Darüber hinaus können noch andere Monomere in den üblichen Mengen verwendet werden, wie Styrol, Chlorstyrol und/oder α-Methylstyrol.

Ganz besonders bevorzugt sind Butylkautschuke mit einem Gehalt an Isoolefinen von 95 bis 99,5 Gew.-% und einem Gehalt an Dienen von 0,5 bis 5,0 Gew.-%. Dabei ist der Einsatz von Butylkautschuken auf Basis von Isobuten und Isopren besonders bevorzugt.

Die erfindungsgemäßen halogenierten Butylkautschuke sind gekennzeichnet durch einen definierten Gehalt an nicht halogenierten Doppelbindungen, einen definierten Gehalt an Antiagglomerat-/Vulkanisationskontrollmitteln und einen definierten Gehalt an Halogen. Es ist daher von Bedeutung, daß bei der Herstellung des Butylkautschuks, ausgehend von den zuvor erwähnten Monomeren so gearbeitet wird, daß sich die erwähnten Gehalte einstellen. Butylkautschuk kann in üblicher Weise hergestellt werden durch Polymerisation in Lösung, in der Gasphase oder nach dem Slurry-Verfahren. Bevorzugt wird die Polymerisation in Suspension (Slurry-Verfahren) durchgeführt (siehe z.B. Bayer Handbuch für die Gummiindustrie Sektion A 9.1, Seite 208 (1991)).

Als Antiagglomerat-/Vulkanisationskontrollmittel kommen insbesondere in Frage: Fettsäure-Salze, beruhend auf Fettsäuren mit 8 bis 22 Kohlenstoffatomen, bevorzugt 12 bis 18 Kohlenstoffatomen, wie Kalzium-, Magnesium-, Kalium-und/oder Ammoniumstearate und -Palmitate sowie -Oleate. Außerdem kommen als Antiagglomerat-/Vulkanisationskontrollmittel in Frage Silikate, wie Kalziumsilikat. Die Antiagglomerat-/Vulkanisationskontrollmittel können einzeln oder im Gemisch untereinander eingesetzt werden. Das günstigste Mischungsverhältnis kann leicht durch entsprechende Vorversuche ermittelt werden. Bevorzugt wird Kalziumstearat und/oder Kalziumpalmitat eingesetzt.

Bei der Herstellung der Butylkautschuke, die als Ausgangsprodukte für die erfindungsgemäßen halogenierten Butylkautschuke, eingesetzt werden, ist darauf zu achten, daß die Antiagglomerat-/Vulkanisationskontrollmittel in den Mengen eingesetzt werden, die den oben angegebenen Mengenbereichen entsprechen.

Die erfindungsgemäßen halogenierten Butylkautschuke können hergestellt werden, indem man entweder feinverteilten Butylkautschuk mit Halogenierungsmitteln, wie Chlor oder Brom, bevorzugt Brom, behandelt, oder indem man zur Herstellung von Brombutylkautschuken Bromierungsagenzien, wie N-Bromsuccinimid, mit dem zugrundeliegenden Butylkautschuk in einer Mischungsapparatur intensiv vermischt oder indem man eine Lösung oder eine Dispersion des zugrundeliegenden Butylkautschuks in geeigneten organischen Lösungsmitteln mit entsprechenden Bromierungsagenzien behandelt (s. z.B.Bayer Handbuch für die Gummiindustrie Sektion A 9.1, Seite 208 (1991)).

Die Halogenierung der zugrundeliegenden Butylkautschuke wird dabei so gesteuert, daß ein Restgehalt an nicht halogenierten bzw. bromierten Doppelbindungen in den zuvor definierten Bereichen verbleibt. Der Gehalt an Halogenen, bevorzugt Brom, liegt dabei in den zuvor angegebenen Bereichen.

Ein weiterer Gegenstand der vorliegenden Erfindung ist ein Verfahren zur Herstellung von halogenierten Butylkautschuken, das dadurch gekennzeichnet ist, daß man Butylkautschuke, die einen Gehalt an Antiagglomerat-/Vulkanisationskontrollmitteln von 1,0 bis 2,2 Gew.-% besitzen, bezogen auf den insgesamt eingesetzten Butylkautschuk, mit Halogenierungsmitteln in der Gasphase oder in Gegenwart eines organischen Lösungsmittels behandelt, bis der Butylkautschuk an Halogenen von 0,5 bis 2,5 Gew.-% und einen Gehalt an nichthalogenierten Doppelbindungen von mehr als 0,7 Mol-% besitzt.

Die erfindungsgemäßen halogenierten Butylkautschuke können verwendet werden zur Herstellung von Kautschukvulkanisaten, indem man beispielsweise die halogenierten Butylkautschuke mit Ruß, Kieselsäure oder anderen bekannten Ingredienzien (Additive) vermischt und mit beispielsweise Schwefel in üblicher Weise vernetzt.

Die halogenierten Butylkautschukvulkanisate finden vor allem Verwendung bei der Herstellung von Reifen, insbesondere für die Herstellung von Reifen-Innenlinern und Reifenseitenwänden sowie auch für Reifen-Laufflächen. Weiterhin finden die halogenierten Butylkautschukvulkanisate Verwendung bei pharmazeutischen Anwendungen, wie Schläuche und Stopfen. Es ist außerdem möglich die halogenierten Butylkautschukvulkanisate in üblichen Mengen abzumischen mit allen bekannten Synthesekautschuken und Naturkautschuken und mit den gebräuchlichen Füllstoffen, wie Ruße oder Kieselsäuren.

Ein weiterer Gegenstand der vorliegenden Patentanmeldung ist also die Verwendung der halogenierten Butylkautschuke zur Herstellung von Reifen, zur Herstellung von Reifen-Innenlinern, zur Herstellung von Reifenseitenwänden, zur Herstellung von Reifenlaufflächen sowie zur Herstellung von pharmazeutischen Gummiartikeln.

Die erfindungsgemäßen halogenierten Butylkautschuke besitzen folgende Vorteile gegenüber den bislang bekannten halogenierten Butylkautschuken oder deren Abmischung mit reinen Butylkautschuken: Gleichbleibende Adhäsion des Reifen-Innenliners an der Karkasse, Erzielung einer höheren Vernetzungsgeschwindigkeit, geringes Rißwachstum beim Gebrauch der Innenliner und insbesondere eine deutliche Alterungsbeständigkeit und damit gekoppelt eine längere Lebensdauer des Innenliners und der Reifen.

### Beispiele

Für die Herstellung der erfindungsgemäßen halogenierten Butylkautschuke wurde ein handelsüblicher Butylkautschuk der Firma Bayer-Rubber N.V., Antwerpen, Belgien, mit dem Handelsnamen Polysar Butyl® 301 eingesetzt. Dieser Butylkautschuk hatte folgende Zusammensetzung und physikalischen Parameter:
Isoprengehalt: 1,55 bis 1,95 Mol-%,
Isobutylengehalt: 97,5 bis 98,0,
Mooney-Viskosität M_{L} 1+8 bei 125°C: 51±5.

Dieser Ausgangsbutylkautschuk wurde in folgender Weise bromiert:
Zunächst wurde eine 15- bis 20 gew.-%ige Lösung des oben erwähnten Butylkautschuks in Hexan hergestellt. Zu der Butylkautschuk-Polymerlösung wurden 36 kg Brom pro 1000 kg eingesetzten Butylkautschuk unter sorgfältig kontrollierten Bedingungen dosiert. Die Bromierung wurde bei 50°C unter intensivem Mischen der hexanischen Polymerlösung durchgeführt. Nach Ende der Reaktion wurde mit 50 gew.-%iger Natriumhydroxidlösung neutralisiert und diesem Gemisch 21 kg pro 1000 kg eingesetzten Butylkautschuk Kalziumstearat zugesetzt sowie 13,5 kg pro 1000 kg epoxidiertes Sojabohnenöl als Stabilisator. Anschließend wurde das Lösungsmittel in üblicher Weise verdampft. Zurück blieb eine Kautschuksuspension aus der der Festkautschuk in üblicher Weise gewonnen wurde. Der erhaltene Brombutylkautschuk besaß einen Bromgehalt von 1,76 %, einen Gehalt an nicht halogenierten Doppelbindungen von 0,77 Mol-%, und einen Fettsäuresalzgehalt von 2,10 Gew.-%, bezogen auf die gesamte Menge an eingesetztem Butylkautschuk (Brombutylkautschuk A).

Auf die gleiche Weise - wie oben beschrieben - wurden die Brombutylkautschuke B, C und D hergestellt (Tabelle 1). Bei den Vergleichsproben E und F handelt es um sich auf die gleiche Weise hergestellte Brombutylkautschuke. Kautschuk E hat die Eigenschaften von Standard Polysar Brombutyl 2030® mit einem Halogengehalt und einem Gehalt an Fettsäuresalz der höher liegt als jener der erfindungsgemäßen Kautschuke. Kautschuk F hat einen niedrigeren Halogengehalt und einen geringeren Gehalt an Fettsäuresalz als die erfindungsgemäßen Kautschuke. Kautschuk G stellt ein Blend aus 70 Teilen Polysar Brombutyl 2030® und 30 Teilen Polysar Brombutyl 402® dar. Unter Verwendung der Brombutylkautschuke aus Tabelle 1 wurden die Mischungen M(A) bis M(G) formuliert (Tabelle 2) Die Mischungsbestandteile aus Tabelle 2 waren Ruß (Corax® N660, erhältlich bei Degussa), Mineralöl (Sunpar® 2280, erhältlich bei Sun Oil), Harz (Pentalyn® A, erhältlich bei Herkules), Stearinsäure (erhältlich bei Henkel), MBTS (Vulkacit® DM/MG, erhältlich bei Bayer).

Diese Mischungskomponenten wurden in einem Werner & Pfleiderer GK 1,5 E Innenmischer gemischt. Zinkoxid und Schwefel wurden danach auf einer Walze zugegeben. Nach der Fertigmischung auf der Walze wurden Probekörper hergestellt. Das Vulkanisationsverhalten (Scorchzeit, t₉₀, maximales Drehmoment) wurde mit einem MDR 2000 (Fa. Flexsys) Rheometer gemessen Als Vulkanisateigenschaften wurden u.a. die mechanischen Eigenschaften, die dynamische Rißbeständigkeit sowie die Haftung zur Karkasse bestimmt.

Die dynamische Rißbeständigkeit wurde mit dem Bayer Tear Analyser gemessen, der durch U. Eisele, S.A. Kelbch und H.W. Engels in Kautsch., Gummi, Kunstst. 45, 1064 (1992) beschrieben wurde. Mit dieser Maschine ist eine Simulation der Last- und Umgebungsbedingungen von Reifengummikomponenten beim Betrieb des Reifens möglich. Für eine Reihe unterschiedlicher Reifenkomponenten, eingeschlossen Innerlinercompounds, konnten gute Korrelationen zwischen den Ergebnissen dieses speziellen Labortests und den Resultaten von Reifenversuchen erreicht werden (siehe A.J.M. Sumner, S.A. Kelbch und U.G. Eisele, Proceedings of the 146th ACS Rubber Division Meeting, October 1994, Pittsburgh Paper 18). Als Probekörper dienen Gummistreifen (60x15x1,5 mm) mit einem seitlichen Einschnitt ( 1 mm tief). Ein Test wird unter kontrollierten Umgebungsbedingungen durchgeführt, die jenen im Reifen entsprechen.

Ein servohydraulischer Antrieb bewegt einen Hubkolben mit den unteren Probenhalterungen. Im Rahmen der Leistungsfähigkeit der Servohydraulik sind den Proben beliebige, zeitabhängige Lastspiele aufprägbar. Für Reifencompounds ist eine pulsförmige Belastungsart angebracht. Jede von hinten beleuchtete (schwarze) Probe (maximal 10 simultan) ist mit einer Kraftmeßdose verbunden, die ihrerseits wieder an einer Schrittmotorführung befestigt ist. Durch die Kraftmeßzelle wird zum einen die zeitabhängige Spannung im Material gemessen, zum anderen die Minimalkraft (Vorspannung) über die Schrittmotoren geregelt. Neben Minimal-und Maximalspannungen und der Dehnung werden auch die gespeicherten Energiedichten und die bleibende Dehnung der Proben gemessen. Das Rissbild wird mit einer CCD-Videoshutterkamera erfaßt, die auf einem schrittmotorgetriebenen x/y-Schlitten befestigt ist. Es wird dann in eine Bilderfassungskarte transferiert, digitalisiert und per Software nach Lokalisierung der Rißlippen und des Rißgrunds durch Ausmessung der Schwarz/Linie des Risses die Rißkontourlänge ermittelt. Aus der Abhängigkeit der Rißkontourlänge von der Zahl der Lastspiele wird die Rißpropagationsrate dlnc/dn=1/c(dc/dn) ermittelt und zwar für den Bereich der Meßdaten bevor katastrophales Rißwachstum einsetzt.

Wie durch Korrelation mit Reifenversuchen gezeigt werden konnte (s. A.J.M. Sumner, S.A. Kelbch, U.G. Eisele, Rubber World 213, No. 2, 38 (1995)), stehen Innerlinercompounds beim Betrieb des Reifens unter konstanter Dehnbelastung, so daß ein Vergleich der Rißpropagationsraten bei konstanter Dehnung zu erfolgen hat.

Die Rißbeständigkeit der untersuchten Mischungen wurde für ungealterte sowie für gealterte (168h bei 120°C, Umluftschrank) Proben gemessen.

Die Haftung zur Karkasse erfolgte an Sandwich-Probekörpern (Butylcompound/Karkasscompound) mit einem textilen Rücken, die für 30 Minuten bei 166°C unter Druck vulkanisiert wurden. Die Haftfestigkeit wird über die Trennkraft definiert, die nötig ist um die beiden Mischungen zu trennen.

Die Ergebnisse aus Tabelle 3 zeigen folgendes:
Die Haftung der Mischung M(F) mit dem Vergleichskautschuk F mit niedrigem Brom- und Calciumstearatgehalt und höherem Anteil an Doppelbindungen zur Karkasse ist deutlich geringer als jene der erfindungsgemäßen Mischungen M(A) bis M(D). Sie zeigt jedoch keinen Modulanstieg nach Alterung sowie eine gute dynamische Rißbeständigkeit. Auf der anderen Seite zeigt die Mischung M(E) mit üblichen Brom-, Calciumstearat- und Doppelbindungsgehalt gute Haftung, jedoch einen Modulanstieg nach Alterung und die schlechteste Rißbeständigkeit.

Wie der Tabelle zu entnehmen ist, hat der Modulanstieg nach Alterung einen negativen Einfluß auf die Rißbeständigkeit von Innerlinermischungen.

Die Mischung M(G) des Vergleichskautschuks G, einem Blend aus Butyl- und Brombutylkautschuk, zeigt auch eine verbesserte Alterungsbeständigkeit aber auch eine reduzierte Vulkanisationsgeschwindigkeit. Die Reduktion der Vulkanisationsgeschwindigkeit führt zu der verschlechterten Haftung zur Karkasse, wenn normale Vulkanisationstemperaturen und -zeiten zugrunde gelegt werden.

Anhand der Daten für die Mischungen M(A) bis M(D) wird deutlich, daß die Reduktion des Brom- und Calciumstearatgehalts den Modul und die Permeabilität der ungealterten Proben nicht verändert. Nur beim geringsten Brom- und Kalziumstearatgehalt (1.2% Br, 1.05%Ca-Stearat) wird eine Abnahme der Haftung beobachtet. Man findet eine deutliche Reduktion der Rißpropagationsraten gegenüber dem Standard, die nach Alterung noch deutlich ausgeprägter ist.

Die Brombutylkautschuke A bis C werden insbesondere empfohlen zur Verwendung in Innerliner-Mischungen langlebiger LKW-Reifen mit einer ausgewogenen Balance der kritischen Eigenschaften.

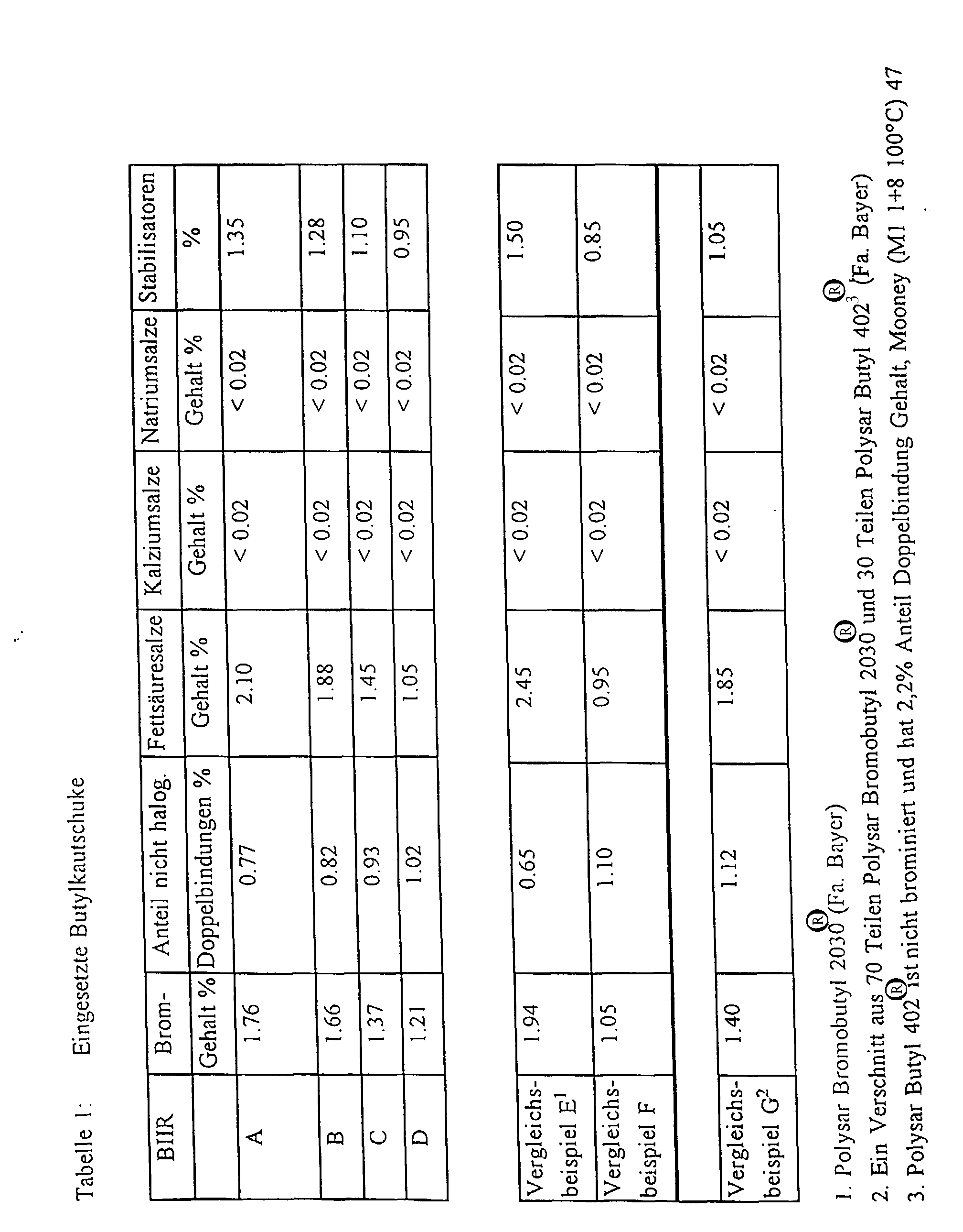

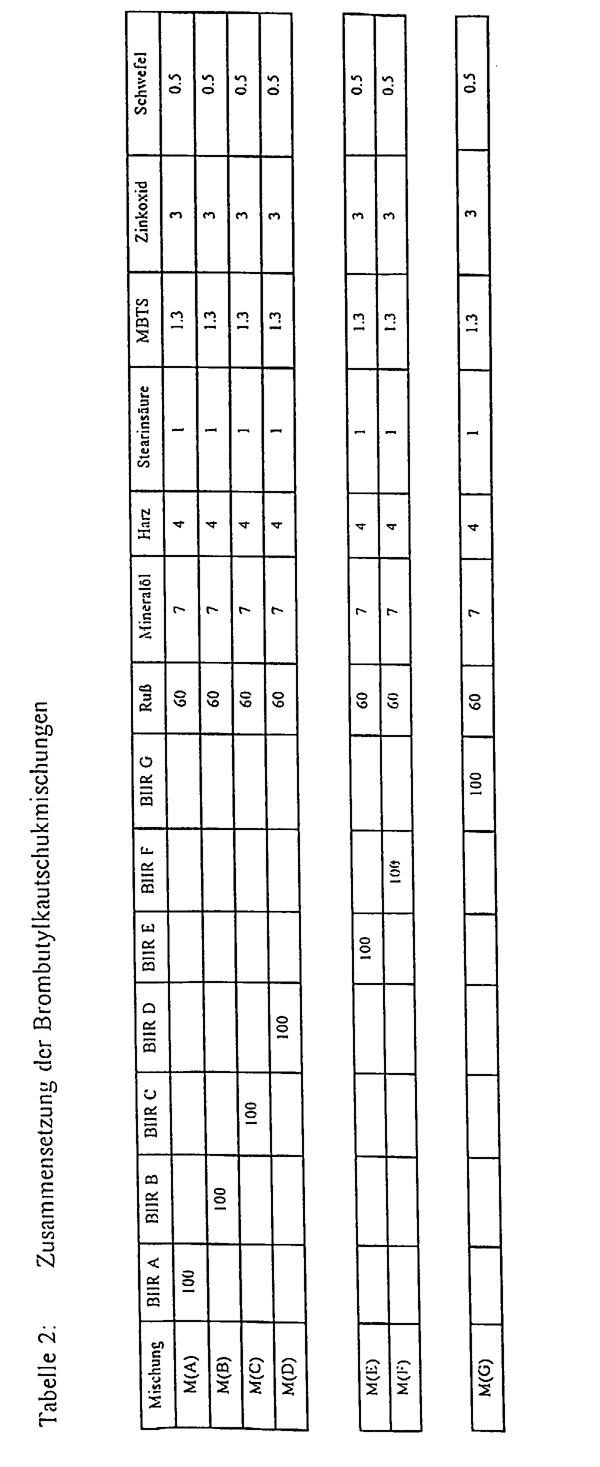

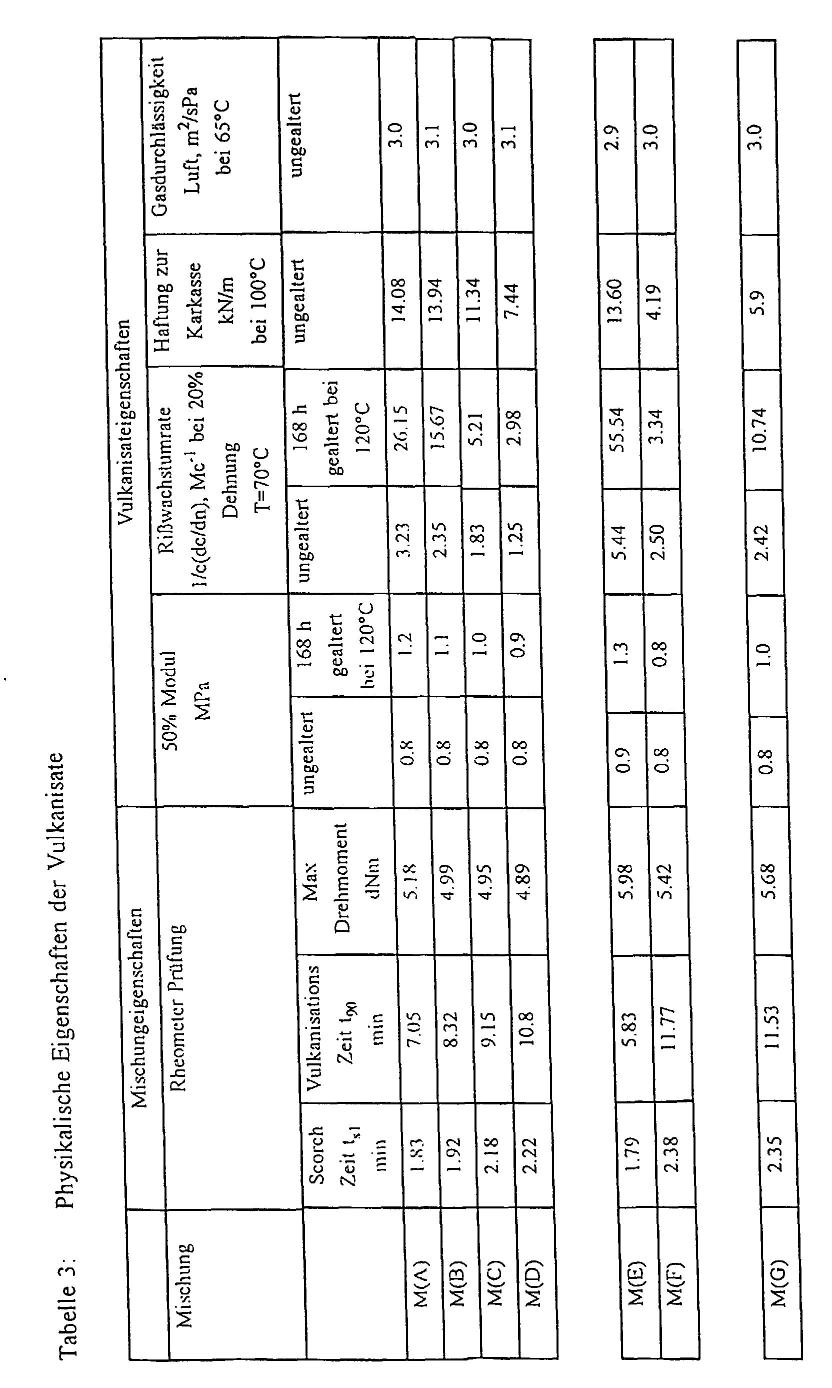

## Patentansprüche

1. Halogenierte Butylkautschuke, dadurch gekennzeichnet, daß sie einen Halogengehalt von 0,5 bis 2,5 Gew.-% sowie einen Gehalt an nicht-halogenierten Doppelbindungen von mehr als 0,7 mol-% besitzen und der Gehalt an Antiagglomerat-Nulkanisationskontrollmitteln 1,0 bis 2,2 Gew.-% beträgt, bezogen auf die Gesamtmenge an halogeniertem Butylkautschuk.

2. Verfahren zur Herstellung von halogenierten Butylkautschuken nach Anspruch 1, dadurch gekennzeichnet, daß man Butylkautschuke, die einen Gehalt an Antiagglomerat-Nulkanisationskontrollmitteln von 1,0 bis 2,2 Gew.-%, bezogen auf den insgesamt eingesetzten Butylkautschuk, besitzen, mit Halogenierungsmitteln in der Gasphase oder in Gegenwart eines organischen Lösungsmittels behandelt, bis der Butylkautschuk einen Gehalt an Halogenen von 0,5 bis 2,5 Gew.-% und einen Gehalt an nicht-halogenierten Doppelbindungen von mehr als 0,7 Mol-% besitzt.

3. Verwendung der halogenierten Butylkautschuke nach Anspruch 1 zur Herstellung von Kautschukvulkanisaten.

4. Verwendung der halogenierten Butylkautschuke nach Anspruch 1 zur Herstellung von Reifen.

5. Verwendung der halogenierten Butylkautschuke nach Anspruch 1 zur Herstellung von Reifen-Innenlinern.

6. Verwendung der halogenierten Butylkautschuke nach Anspruch 1 zur Herstellung von Reifenseitenwänden.

7. Verwendung der halogenierten Butylkautschuke nach Anspruch 1 zur Herstellung von Reifenlaufflächen.

8. Verwendung der halogenierten Butylkautschuke nach Anspruch 1 zur Herstellung von pharmazeutischen Gummiartikeln.

## Claims

1. Halogenated butyl rubbers, characterised in that they have a halogen content of 0.5 to 2.5 % by weight and a content of non-halogenated double bonds greater than 0.7 mol %, and their content of anti-agglomeration/vulcanisation control agents is 1.0 to 2.2 % by weight, with respect to the total amount of halogenated butyl rubber.

2. A method of producing halogenated butyl rubbers according to claim 1, characterised in that butyl rubbers which have a content of anti-agglomeration/vulcanisation control agents of 1.0 to 2.2 % by weight with respect to the total butyl rubber used are treated with halogenating agents in the gas phase or in the presence of an organic solvent until the butyl rubber has a content of halogens of 0.5 to 2.5 % by weight and a content of non-halogenated double bonds greater than 0.7 mol %.

3. The use of the halogenated butyl rubbers according to claim 1 for the production of vulcanised rubber materials.

4. The use of the halogenated butyl rubbers according to claim 1 for the production of tyres.

5. The use of the halogenated butyl rubbers according to claim 1 for the production of tyre inner liners.

6. The use of the halogenated butyl rubbers according to claim 1 for the production of tyre sidewalls.

7. The use of the halogenated butyl rubbers according to claim 1 for the production of tyre treads.

8. The use of the halogenated butyl rubbers according to claim 1 for the production of pharmaceutical rubber articles.

## Revendications

1. Caoutchoucs Butyl halogénés caractérisés par une teneur en halogène de 0,5 à 2,5 % en poids, une teneur en doubles liaisons non halogénées supérieure à 0,7 mol% et une teneur en agents anti-agglomérat/régulateurs de vulcanisation de 1,0 à 2,2 % par rapport au poids total du caoutchouc Butyl halogéné.

2. Procédé pour la préparation de caoutchoucs Butyl halogénés selon revendication 1, caractérisé en ce que l'on traite des caoutchoucs Butyl à une teneur en agents anti-agglomérats/régulateurs de vulcanisation de 1,0 à 2,2 % du poids total du caoutchouc Butyl mis en oeuvre, par des agents halogénants en phase gazeuse ou en présence de solvants organiques, jusqu'à ce que le caoutchouc Butyl ait une teneur en halogène de 0,5 à 2,5 % en poids et une teneur en doubles liaisons non halogénées supérieure à 0,7 mol%.

3. Utilisation des caoutchoucs Butyl halogénés selon revendication 1 pour la fabrication de vulcanisats de caoutchoucs.

4. Utilisation des caoutchoucs Butyl halogénés selon revendication 1 pour la fabrication de pneumatiques.

5. Utilisation des caoutchoucs Butyl halogénés selon revendication 1 pour la fabrication de doublures internes de pneumatiques.

6. Utilisation des caoutchoucs Butyl halogénés selon revendication 1 pour la fabrication de parois latérales de pneumatiques.

7. Utilisation des caoutchoucs Butyl halogénés selon revendication 1 pour la fabrication de bandes de roulement de pneumatiques.

8. Utilisation des caoutchoucs Butyl halogénés selon revendication 1 pour la fabrication d'articles pharmaceutiques en caoutchouc.
